Europäisches Patentamt

European Patent Office

Office européen des brevets

(19)

(11) EP 0 928 101 A2

(12) # EUROPEAN PATENT APPLICATION

(43) Date of publication:
07.07.1999 Bulletin 1999/27

(51) Int Cl.$^6$: H04N 3/15

(21) Application number: 98310649.3

(22) Date of filing: 23.12.1998

(84) Designated Contracting States:
AT BE CH CY DE DK ES FI FR GB GR IE IT LI LU
MC NL PT SE
Designated Extension States:
AL LT LV MK RO SI

(30) Priority: 31.12.1997 US 70223 P

(71) Applicant: TEXAS INSTRUMENTS
INCORPORATED
Dallas Texas 75265 (US)

(72) Inventors:
• Chen, Zhiliang Julian
Dallas, Texas 75093 (US)
• Dierschke, Eugene G.
Dallas, Texas 75248 (US)

(74) Representative: Harris, Ian Richard et al
D. Young & Co.,
21 New Fetter Lane
London EC4A 1DA (GB)

(54) **CMOS area array sensors**

(57)    Two methods for suppressing the fixed pattern noise effects of a pixel reset switch by ensuring that the reset NMOS device operates in its linear region. The first approach uses a separate reset switch supply voltage, $V_{RES}$, set to at least one threshold voltage below the sensing switch supply voltage, $V_{dd}$. The second approach uses a charge pump (200) and level shifter (204) to push the reset gate voltage at least one threshold voltage higher than a supply voltage $V_{dd}$ common to both the reset (RES) and sense (SEL) transistors.

FIG. 1

## Description

The present application is related to: US patent application number 60/070,082 entitled "Sequential Correlated Double Sampling Technique for CMOS Area Array Sensors" filed on December 31, 1997; and US patent application number 60/070,083 "Fast Frame Readout Architecture for Array Sensors with Integrated Correlated Double Sampling System" filed on December 31, 1997, the contents of both of which are herein incorporated by reference. Copies of these related applications were filed with the present European patent application and are available for public inspection in the official file.

The invention relates to imaging sensors, more especially to CMOS imaging sensors.

Imagers based on the charged couple device ("CCD") are in widespread use. CCD imager circuits require a manufacturing process which is incompatible with standard CMOS processing. Thus CCD imager circuits cannot be integrated on a single chip with other circuits that provide support functions. For example, separate CCD control, A/D conversion, and signal processing chips are needed. The operation of a CCD imager also requires multiple voltage supplies varying from, e.g. 5V to 12V.

CMOS imagers have also been previously proposed as imagers, but their use has been limited.

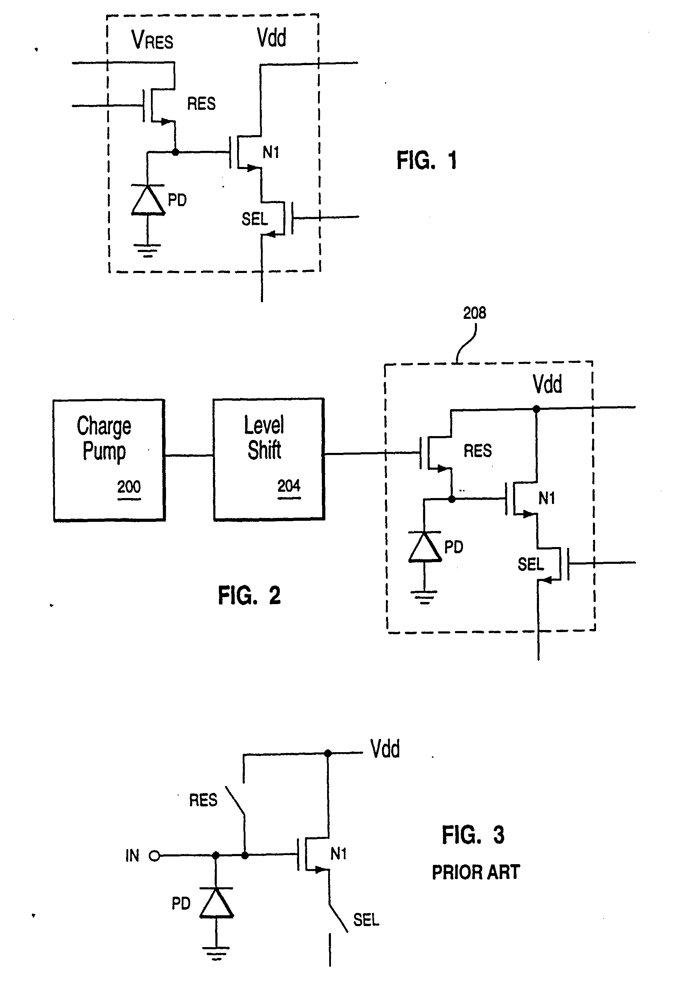

One disadvantage with CMOS imagers is Fixed Pattern Noise ("FPN"). FPN is a built-in characteristic of X-Y addressable devices. FPN is noise that appears in a fixed pattern because the noise level is related to the position of the pixel in the array, the geometry of the column bus, and the proximity of other noise sources. (In addition, there is purely random noise not correlated to the pixel position, but due to inherent characteristics of the detector.) FPN results from process limitations which produce device mismatches and/or non-uniformities of the sensor during fabrication on a wafer. FPN consists of both pixel FPN and column FPN. Each pixel circuit comprises at least a photodiode and a sensing transistor (operating as source-follower) as shown in Figure 2 of the accompanying drawings. Mismatches of the sensing transistor between pixels may produce different output levels for a given input optical signal. The variations of these output levels is called pixel FPN. Additionally, each column (or row) has separate read circuitry. Driver mismatches between different columns (or rows) produce column FPN. Most device mismatches are caused by threshold voltage ($V_T$) mismatches among CMOS transistors across the wafer.

A conventional way of FPN suppression is to use a memory block to store the signal data for a whole frame and to subtract the FPN by sampling a reset voltage for the whole frame. The subtraction is done on a frame-by-frame basis and tends to result in slow frame rates.

A technique called Correlated Double Sampling ("CDS") can be used to remove several kinds of noise in high-performance imaging systems. CDS involves taking two samples of a sensor output. First, a reference sample is taken that includes background noise and noise derived from a device mismatch. Then, a second sample is taken of the background noise, device mismatch, and the data signal. Subtracting the two samples removes any noise which is common (or correlated) to both, leaving only the data signal. CDS is discussed in greater detail in a paper by Chris Mangelsdorf et al, 1996 IEEE International Solid-State Circuits Conference, pages 186 and 187.

No solutions are known to exist for suppressing FPN caused by the mismatch effects of an NMOS reset switch in CMOS imagers. In silicon fabrication, a NMOS switching device with minimum size is normally used as the reset switch in order to obtain minimum pixel size for good image resolution, and to minimize parasitic capacitances. Variations in the device threshold votages, $V_T$, and sizes of the NMOS switching devices when fabricated in a wafer can be a large source of FPN. The effects are similar to the PFN caused by the variations of pixel-sensing NMOS transistors in a CMOS imager, without a Sequential CDS implementation ("SCDS").

Particular and preferred aspects of the invention are set out in the accompanying independent and dependent claims. Features of the dependent claims may be combined with those of the independent claims as appropriate and in combinations other than those explicitly set out in the claims.

According to a first aspect of the invention there is provided a technique for suppressing fixed pattern noise derived from a pixel reset switch based on a mismatch Independent Reset Sensing ("MIRS") technique which enables reset-switch sensing in SCDS or CDS architectures to be independent of NMOS switching device variations. This is achieved by ensuring that the reset switch operates in its linear region when turned ON. Therefore, even if mismatch effects exist in an NMOS reset switching device, the mismatch effect will not produce PFN on the pixel readout.

The MIRS technique can be implemented so that the reset switch mismatch effects in a CMOS area array sensor will not produce FPN at the output. MIRS, optionally together with the SCDS technique of the cross-referenced application, can suppress FPN by 1/25 to 1/20. Therefore, wide-spread application of CMOS imagers can be realized. Another advantage is that the technique can be easily integrated with other CDS techniques. Another advantage is that the method can provide a full-integrated and low-cost solution with a single chip incorporating all the necessary digital circuits for the CMOS imager system.

According to a second aspect of the invention, there is provided a method for operating a pixel circuit in a photosensing integrated circuit, comprising the steps of: turning on a reset transistor, using a reset gate voltage which is more in magnitude than any source/drain voltage of said reset transistor by a value of at least the sum of one threshold voltage plus the maximum threshold variation of the given process; and, after turning off said reset transistor, allowing a photosensing device to apply a illumination-dependent current to one of said source/drain terminals of a sensing transistor for a desired integration time; and thereafter sensing the voltage on said one source/drain terminal of said reset transistor.

According to a third aspect of the invention, there is provided a method for operating a photosensing device, comprising the steps of: providing a first supply voltage to a reset transistor, and turning on said reset transistor with a reset gate voltage which is approximately equal to a second supply voltage which exceeds in magnitude said first supply voltage; wherein said first supply voltage is always less in magnitude than said second supply voltage by at least the sum of one threshold voltage plus the maximum threshold variation of the given process; and wherein said reset transistor is connected to apply an initial voltage, which is precisely equal to said first supply voltage, regardless of the threshold voltage of said reset transistor, to the gate of a sensing transistor; and allowing a photosensing device to apply a illumination-dependent current to said gate of said sensing transistor for a desired integration time; and sensing current passed by said sensing transistor.

According to a fourth aspect of the invention, there is provided a pixel circuit, comprising: a photosensing subcircuit; and a plurality of active devices per said pixel circuit, comprising a reset transistor, a sensing transistor, and a selecting transistor; wherein said reset and sensing transistors receive first and second supply voltages, respectively; wherein said reset transistor intermittently receives a reset gate voltage which is equal to said second supply voltage; wherein said first supply voltage is always less in magnitude than said second supply voltage by at least the sum of one threshold voltage plus the maximum threshold variation of the given process; wherein said reset circuit operates in either a linear mode or an off mode, in dependence on said reset gate voltage; wherein said selecting transistor switches to either select a photosensing voltage or said first supply voltage.

According to a fifth aspect of the invention, there is provided a photosensing imaging system, comprising:a focusing element; an integrated imager circuit, comprising: a plurality of pixel circuits comprising active devices; said active devices comprising a reset transistor, a sensing transistor, and a selecting transistor; wherein said reset and sensing transistors receive first and second supply voltages, respectively; wherein said reset transistor intermittently receives a reset gate voltage which is equal to said second supply voltage; wherein said first supply voltage is always less in magnitude than said second supply voltage by at least the sum of one threshold voltage plus the maximum threshold variation of the given process; wherein said reset circuit operates in either a linear mode or an off mode, in dependence on said reset gate voltage; wherein said selecting transistor switches to either select a photosensing voltage or said first supply voltage; and pixel readout circuitry; a processor connected to control said imager; and a storage medium for receiving and storing data from said imager.

According to a sixth aspect of the invention, there is provided a pixel circuit, comprising: a photosensing subcircuit; and a plurality of active devices per said pixel circuit, comprising a reset transistor, a sensing transistor, and a selecting transistor; wherein said reset and sensing transistors receive a common supply voltage; wherein said reset transistor turns on with a reset gate voltage which exceeds said common supply voltage in magnitude by at least the sum of one threshold voltage plus the maximum threshold variation of the given process; wherein said reset transistor operates in either a linear mode or an off mode, in dependence on said reset gate voltage; wherein said selecting transistor switches to select either a photosensing voltage or said common supply voltage.

It is thus possible to exploit recent advances in CMOS technology to provide imagers offering significant improvements in functionality, power, and cost of, for example, for digital video and still cameras. Sub-micron CMOS technology can be used to realise pixels which contain several FETs and provide imagers comparable in size to those existing on commercial CCD imagers. Fabrication on standard CMOS process lines permits these imagers to be fully integrated with digital circuitry to create single-chip camera systems. A CMOS area array sensor (or CMOS imager) according to an embodiment of the invention can be fabricated together with other system functions, e.g. controller, A/D, signal processor, and DSP. Hence, the cost of a CMOS based system can be reduced. A CMOS imager can be provided which is operable with a single low supply voltage, e.g. 3.3V or 5V providing relatively low power consumption.

For a better understanding of the invention and to show how the same may be carried into effect reference is now made by way of example to the accompanying drawings in which:

Figure 1 shows a first embodiment for suppressing FPN from a non-ideal reset switch;
Figure 2 shows a second embodiment for suppressing FPN from a non-ideal reset switch;
Figure 3 shows a typical pixel circuit configuration;
Figure 4 shows an integrated circuit imaging chip using the readout architecture of the first or second embodiment; and
Figure 5 shows a camera using the integrated circuit imaging chip of Figure 4.

Two different types of sensors can be realized in CMOS technology. These are passive and active pixel sensors. The difference between these two types is that a passive pixel does not perform signal amplification whereas an active pixel does. A passive-pixel sensor is simply a photodiode (MOS or p-n junction diode) with a transistor that passes photoelectrically generated signal charge to an amplifier outside the pixel array. **Figure 3** shows a typical active-pixel sensor circuit. The gate of transistor **N1** is connected to a reset switch **RES** and the cathode of a photodiode **PD**. Initially, the reset switch RES is open and the voltage at node **IN** approximates the voltage generated by the photodiode, $V_{PD}$. A finite charge exists at node IN which is dependent on both the capacitances of the photodiode PD and gate of the NMOS transistor N1. When select switch SEL is closed, the voltage at node IN is read from the pixel circuit, less a threshold voltage $V_T$. When reset switch RES is closed, the voltage at node IN rises to approximately $V_{dd}$. The voltage at node IN is again read from the pixel circuit. Subtracting the two samples removes any noise which is common (or correlated) to both, leaving only the data signal. However, this approach does not suppress the mismatch effect caused by a non-ideal reset switch RES since the switch is outside of the double-sampling path.

Two approaches to solving this problem are disclosed in this application. The basic concept of MIRS is to force the NMOS reset switching device RES to remain in its linear region when it turns ON. **Figure 1** shows a first embodiment for suppressing FPN from a non-ideal reset switch. The drain of the transistor reset switch RES is connected to a reset voltage source, $V_{RES}$, which is independent of $V_{dd}$. Voltage $V_{RES}$ should be set less than $V_{dd}$ by at least one $V_T$, the threshold voltage, (including backgate bias effect) plus **delta($V_T$)** (the maximum $V_T$ variation for a given process), for all operational conditions (for example, a wide temperature range, bright-light sensing, and dark sensing).

Thus,

$$V_{RES} < V_{dd} - (V_T + delta(V_T)).$$

During normal switching operations, the gate of the reset transistor RES is switched between a low voltage and $V_{dd}$ to turn transistor RES OFF and ON, respectively. When the gate voltage of transistor RES is approximately $V_{dd}$, transistor RES is operating in its linear region (the difference of $V_{dd}$ and $V_{RES}$ is at least one $V_T$, which is sufficient to operate transistor RES in its linear region). In linear mode, the source or gate voltage of the pixel-sensing transistor N1 can be pulled up to the transistor RES drain voltage, $V_{RES}$. The drain voltage is equal to $V_{RES}$, no matter what the fabricated size of transistor RES, or the associated $V_T$ voltage variation. Therefore, each of the pixel-sensing NMOS transistors N1 in a CMOS imager are able to sense the same $V_{RES}$ voltage during the reset phase, regardless of the variations in threshold voltages inherent across the large number of reset switches fabricated in the pixel circuits of the imager. Therefore the mismatch effect of the reset switching transistor RES is significantly reduced and hence FPN on the pixel readout is also significantly reduced.

**Figure 2** shows a second embodiment for suppressing FPN from a non-ideal reset switch. This approach connects the drain of the reset switching transistor RES to $V_{dd}$ (which is also connected to the drain of pixel-sensing transistor N1). To ensure that the reset transistor RES operates in its linear region, the gate voltage $V_g$ of transistor RES is set higher than the $V_{dd}$; at least one $V_T$ (including backgate bias effect) plus delta ($V_T$) (the maximum $V_T$ variation for a given process), for all operational conditions (for example, a wide temperature range, bright-light sensing, and dark sensing). Thus the higher gate voltage, $V_{gh}$, of the reset transistor RES is derived as follows,

$$V_{gh} > V_{dd} + (V_T + delta(V_T)).$$

To avoid the need for another voltage supply for such an implementation, a charge pump circuit **200** is added to obtain the higher gate voltage level, $V_{gh}$. A level-shift circuit **204** is connected between the charge pump 200 and pixel circuits 204 to increase the input gate voltage level of transistor RES from $V_{dd}$ to $V_{gh}$. With this implementation, all pixel-sensing transistors N1 in a CMOS imager are able to sense the exact same $V_{dd}$ voltage during the reset phase. Therefore the mismatch effect of the reset transistor RES will not produce FPN during readout of the pixel.

In the first approach, the reset voltage $V_{RES}$ is derived independently of the supply voltage $V_{dd}$, and consequently, an additional line is needed for the pixel circuit. Therefore the area of the pixel in the first approach is slightly larger than the area of the pixel in the second approach. Hence the optical fill factor (the percentage of area in the array actually used for sensing) in the first approach will be smaller than that in the second approach for pixels of equal size.

In the second approach, both the charge pump 200 and level shift 204 circuits are implemented outside of the pixel circuit. Therefore a higher optical fill factor can be achieved than that of the first approach. Additionally, the charge pump circuit 200 may not be required in a dual 3.3V/5V power supply CMOS process. For such a process, the higher gate voltage, $V_{gh}$, can be set directly to be 5V while the $V_{dd}$ is 3.3V.

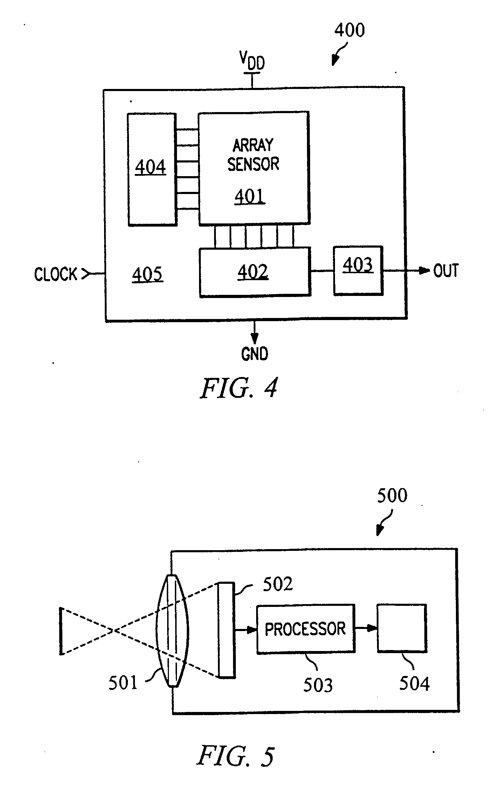

Figure 4 shows an imager chip comprising the sampling architecture of the first or second embodiment. The chip 400 incorporates a row select circuitry 404 and column select circuitry 402 to read the array sensor 401. The output circuitry 403 receives pixel data from the column circuitry 402 and presents it to the output terminal OUT. Additional support circuit may be fabricated in the peripheral region 405. The chip 400 also has connections for supply voltage VDD, ground GND, and clocking signals CLOCK.

Figure 5 shows a camera using an integrated circuit imaging chip using with the readout architecture of the first or second embodiment. The camera 500 has a lens 501 which focuses an image onto the image sensor chip 502. A processor 503 receives the data from the image chip 503 and sends it to a storage and output system 504.

Embodiments of the invention may be modified or varied, for example as follows.

Other circuit elements can be added to, or substituted into, the specific circuit topologies shown.

Nonlinear devices can be added in series with (or used to replace) resistors, to increase the impedance of load devices.

A variety of well-known current mirror configurations can be substituted for those shown.

A variety of well-known amplifier configurations can be substituted for those shown.

The apparatus and method can also be used in reduced voltage array architectures.

Further particular and preferred aspects of the invention are set out in the accompanying independent and dependent clauses. Features of the dependent clauses may be combined with those of the independent clauses and independent claims as appropriate and in combinations other than those explicitly set out in the clauses and claims.

1. A method for operating a pixel circuit in a photosensing integrated circuit, comprising the steps of:

(a.) turning on a reset transistor, using a reset gate voltage which is more in magnitude than any source/drain voltage of said reset transistor by a value of at least the sum of one threshold voltage plus the maximum threshold variation of the given process; and, after turning off said reset transistor,
(b.) allowing a photosensing device to apply a illumination-dependent current to one of said source/drain terminals of a sensing transistor for a desired integration time; and thereafter
(c.) sensing the voltage on said one source/drain terminal of said reset transistor.

2. The method of clause 1, wherein said pixel circuit is an active pixel architecture.

3. The method of clause 1, wherein said sensing step (c.) uses a respective sensing transistor which is integrated in a single pixel with said reset transistor and said photosensing device.

4. The method of clause 1, wherein fixed pattern noise is substantially reduced when said method is used in conjunction with a correlated double sampling architecture.

5. The method of clause 1, wherein said threshold voltage also comprises backgate bias effects of said reset transistor.

6. The method of clause 1, further comprising the subsequent step of applying a correlated double sampling operation to an output of a select transistor operatively connected to said sensing transistor.

7. The method of clause 1, wherein said sensing transistor, and said reset transistor comprise NMOS devices.

8. The method of clause 1, wherein said photosensing device comprises a photodiode.

9. A method for operating a photosensing device, comprising the steps of:

(a.) providing a first supply voltage to a reset transistor, and turning on said reset transistor with a reset gate voltage which is approximately equal to a second supply voltage which exceeds in magnitude said first supply voltage; wherein said first supply voltage is always less in magnitude than said second supply voltage by at least the sum of one threshold voltage plus the maximum threshold variation of the given process; and wherein said reset transistor is connected to apply an initial voltage, which is precisely equal to said first supply voltage, regardless of the threshold voltage of said reset transistor, to the gate of a sensing transistor; and
(b.) allowing a photosensing device to apply a illumination-dependent current to said gate of said sensing transistor for a desired integration time; and
(c.) sensing current passed by said sensing transistor.

10. The method of clause 9, wherein said pixel circuit is an active pixel architecture.

11. The method of clause 9, wherein fixed pattern noise is substantially reduced when said method is used in conjunction with a correlated double sampling architecture.

12. The method of clause 9, wherein said threshold voltage variation also comprises backgate bias effects of said reset transistor.

13. The method of clause 9, further comprising the subsequent step of applying a correlated double sampling operation to an output of a select transistor operatively connected to said sensing transistor.

14. The method of clause 9, wherein said sensing transistor and said reset transistor comprise NMOS devices.

15. The method of clause 9, wherein said photosensing device comprises a photodiode.

16. A pixel circuit, comprising:

a photosensing subcircuit; and
a plurality of active devices per said pixel circuit, comprising a reset transistor, a sensing transistor, and a selecting transistor; wherein said reset and sensing transistors receive first and second supply voltages, respectively; wherein said reset transistor intermittently receives a reset gate voltage which is equal to said second supply voltage; wherein said first supply voltage is always less in magnitude than said second supply voltage by at least the sum of one threshold voltage plus the maximum threshold variation of the given process; wherein said reset circuit operates in either a linear mode or an off mode, in dependence on said reset gate voltage; wherein said selecting transistor switches to either select a photosensing voltage or said first supply voltage.

17. The circuit of clause 16, wherein fixed pattern noise is substantially reduced when said method is used in conjunction with a correlated double sampling architecture.

18. The circuit of clause 16, wherein said reset transistor is biased into a linear mode and fixed pattern noise is substantially reduced by a correlated double sampling operation.

19. The circuit of clause 16, wherein said threshold voltage also comprises backgate bias effects of said reset transistor.

20. The circuit of clause 16, wherein a correlated double sampling operation is applied to said output of said select transistor.

21. The circuit of clause 16, wherein said sensing transistor, said reset transistor, and said selecting transistor comprise NMOS devices.

22. The circuit of clause 16, wherein said photosensing subcircuit comprises a photodiode.

23. A photosensing imaging system, comprising:

a focusing element;
an integrated imager circuit, comprising:

a plurality of pixel circuits comprising active devices; said active devices comprising a reset transistor, a sensing transistor, and a selecting transistor; wherein said reset and sensing transistors receive first and second supply voltages, respectively; wherein said reset transistor intermittently receives a reset gate voltage which is equal to said second supply voltage; wherein said first supply voltage is always less in magnitude than said second supply voltage by at least the sum of one threshold voltage plus the maximum threshold variation of the given process; wherein said reset circuit operates in either a linear mode or an off mode, in dependence on said reset gate voltage; wherein said selecting transistor switches to either select a photosensing voltage or said first supply voltage; and
pixel readout circuitry;

a processor connected to control said imager; and
a storage medium for receiving and storing data from said imager.

24. The system of clause 23, wherein said threshold voltage variation also comprises backgate bias effects of said reset transistor.

25. The system of clause 23, wherein a correlated double sampling operation is applied to said output of said select transistor.

26. The system of clause 23, wherein said sensing transistor, said reset transistor, and said selecting transistor comprise NMOS devices.

27. The system of clause 23, wherein said photosensing subcircuit comprises a photodiode.

28. A pixel circuit, comprising:

a photosensing subcircuit; and
a plurality of active devices per said pixel circuit, comprising a reset transistor, a sensing transistor, and a selecting transistor; wherein said reset and sensing transistors receive a common supply voltage; wherein said reset transistor turns on with a reset gate voltage which exceeds said common supply voltage in magnitude by at least the sum of one threshold voltage plus the maximum threshold variation of the given process; wherein said reset transistor operates in either a linear mode or an off mode, in dependence on said reset gate voltage; wherein said selecting transistor switches to select either a photosensing voltage or said common supply voltage.

29. The circuit of clause 28, wherein fixed pattern noise is substantially reduced when said method is used in conjunction with a correlated double sampling architecture.

30. The circuit of clause 28, wherein said reset transistor is biased into a linear mode and fixed pattern noise is substantially reduced when said method is used in conjunction with a correlated double sampling architecture.

31. The circuit of clause 28, wherein said threshold voltage variation also comprises backgate bias effects of said reset transistor.

32. The circuit of clause 28, wherein a correlated double sampling operation is applied to said output of said select transistor.

33. The circuit of clause 28, wherein said sensing transistor, said reset transistor, and said selecting transistor comprise NMOS devices.

34. The circuit of clause 28, wherein said photosensing subcircuit comprises a photodiode.

## Claims

1. A method for operating a pixel circuit in a photosensing integrated circuit, comprising the steps of:

(a.) turning on a reset transistor, using a reset gate voltage which is more in magnitude than any source/drain voltage of said reset transistor by a value of at least the sum of one threshold voltage plus the maximum threshold variation of the given process; and, after turning off said reset transistor,
(b.) allowing a photosensing device to apply a illumination-dependent current to one of said source/drain terminals of a sensing transistor for a desired integration time; and thereafter
(c.) sensing the voltage on said one source/drain terminal of said reset transistor.

2. The method of Claim 1, wherein said pixel circuit is an active pixel architecture.

3. The method of Claim 1 or 2, wherein said sensing step (c) uses a respective sensing transistor which is integrated in a single pixel with said reset transistor and said photosensing device.

4. The method of Claim 1, 2 or 3, wherein fixed pattern noise is substantially reduced when said method is used in conjunction with a correlated double sampling architecture.

5. The method of any preceding claim, wherein said threshold voltage also comprises backgate bias effects of said reset transistor.

6. The method of any preceding claim, further comprising the subsequent step of applying a correlated double sampling operation to an output of a select transistor operatively connected to said sensing transistor.

7. A method for operating a photosensing device, comprising the steps of:

(a.) providing a first supply voltage to a reset transistor, and turning on said reset transistor with a reset gate voltage which is approximately equal to a second supply voltage which exceeds in magnitude said first supply voltage; wherein said first supply voltage is always less in magnitude than said second supply voltage by at least the sum of one threshold voltage plus the maximum threshold variation of the given process; and wherein said reset transistor is connected to apply an initial voltage, which is precisely equal to said first supply voltage, regardless of the threshold voltage of said reset transistor, to the gate of a sensing transistor; and
(b.) allowing a photosensing device to apply a illumination-dependent current to said gate of said sensing transistor for a desired integration time; and
(c.) sensing current passed by said sensing transistor.

8. A pixel circuit, comprising:

a photosensing subcircuit; and
a plurality of active devices per said pixel circuit, comprising a reset transistor, a sensing transistor, and a selecting transistor; wherein said reset and sensing transistors receive first and second supply voltages, respectively; wherein said reset transistor intermittently receives a reset gate voltage which is equal to said second supply voltage; wherein said first supply voltage is always less in magnitude than said second supply voltage by at least the sum of one threshold voltage plus the maximum threshold variation of the given process; wherein said reset circuit operates in either a linear mode or an off mode, in dependence on said reset gate voltage; wherein said selecting transistor switches to either select a photosensing voltage or said first supply voltage.

9. A photosensing imaging system, comprising:

a focusing element;
an integrated imager circuit, comprising:

a plurality of pixel circuits comprising active devices; said active devices comprising a reset transistor, a sensing transistor, and a selecting transistor; wherein said reset and sensing transistors receive first and second supply voltages, respectively; wherein said reset transistor intermittently receives a reset gate voltage which is equal to said second supply voltage; wherein said first supply voltage is always less in magnitude than said second supply voltage by at least the sum of one threshold voltage plus the maximum threshold variation of the given process; wherein said reset circuit operates in either a linear mode or an off mode, in dependence on said reset gate voltage; wherein said selecting transistor switches to either select a photosensing voltage or said first supply voltage; and
pixel readout circuitry;

a processor connected to control said imager; and
a storage medium for receiving and storing data from said imager.

10. A pixel circuit, comprising:

a photosensing subcircuit; and
a plurality of active devices per said pixel circuit, comprising a reset transistor, a sensing transistor, and a selecting transistor; wherein said reset and sensing transistors receive a common supply voltage; wherein said reset transistor turns on with a reset gate voltage which exceeds said common supply voltage in magnitude by at least the sum of one threshold voltage plus the maximum threshold variation of the given process; wherein said reset transistor operates in either a linear mode or an off mode, in dependence on said reset gate voltage; wherein said selecting transistor switches to select either a photosensing voltage or said common supply voltage.

FIG. 1

FIG. 2

FIG. 3

PRIOR ART

**FIG. 4**

**FIG. 5**